# EUROPEAN PATENT SPECIFICATION

(11) **EP 4 552 431 B1**
(45) Date of publication and mention of the grant of the patent: **03.06.2026**
(21) Application number: 23748407.6
(22) Date of filing: 30.06.2023
(51) Int. Cl.: H04W 28/082, H04W 72/52, H04W 76/15, H04W 84/12

(54) **INFRASTRUCTURE-LED OPTIMIZATION FOR WI-FI 7 MULTILINK DEVICES**
INFRASTRUKTUR-LED-OPTIMIERUNG FÜR WIFI-7-MULTILINK-VORRICHTUNGEN
OPTIMISATION DE DEL D'INFRASTRUCTURE POUR DES DISPOSITIFS À LIAISONS MULTIPLES WI-FI 7

(30) Priority: 08.07.2022 US 202263368026 P; 20.04.2023 US 202318303864
(43) Date of publication of application: 14.05.2025
(73) Proprietor: Cisco Technology, Inc., San Jose, California 95134-1706 (US)
(72) Inventor: DESAI, Vishal S., San Jose, California 95148 (US); MONAJEMI, Pooya, Irvine, California 92614 (US); KULKARNI, Santosh B., San Jose, California 95129 (US)
(74) Representative: Jarrett, Daniel Phillip
(86) International application number: PCT/US2023/069535
(87) International publication number: WO 2024/011081

(56) References cited:
- WO-A1-2007/102546
- WO-A1-2013/078666
- WO-A1-2013/112952
- US-A1- 2009 059 785
- US-A1- 2014 258 062
- US-A1- 2020 274 656

## Description

### CROSS-REFERENCE TO RELATED APPLICATIONS

This application claims benefit of co-pending United States provisional patent application Serial No. 63/368026 filed July 8, 2022.

### TECHNICAL FIELD

Embodiments presented in this disclosure generally relate to wireless networks. More specifically, embodiments disclosed herein include the operation of wireless networks with multiple spectra radio links.

### BACKGROUND

In Wi-Fi 7, various types of operation for MLD (Multilink Devices) are supported. One class of devices includes non-AP MLD stations that perform simultaneous transmit-receive (STR) operations in multiple links (STR-MLMR). Another class of devices includes those that perform either transmit or receive operations at a given time on two links but cannot receive on one link while transmitting on another (non-STR MLMR). Yet another class of devices includes those that have a single radio (SR) that listens on multiple frequencies for channel access but can perform one transmit or receive operation at a given time (eMLSR). Yet another class of devices includes those that can perform transmit and receive operations on different spectra but are active on only one spectrum at a time (MLSR). Moreover, devices in this class can switch their radios among different spectra. More information on these classes of devices is available in P802.11be_D1.4 draft document (page 48), also referred to as the EHT specification.

The main object of these devices is to maximize performance, but with multiple spectra devices, new challenges arise. For example, the infrastructure cannot predict or dictate the spectrum in which these devices will awaken if they are sleeping or in a power-saving mode. Based on Wi-Fi density, an AP may decide that a set of 2.4 GHz radios should remain off to minimize interference so that the device will not operate on the 2.4 GHz band. Similarly, if the density of 6 GHz devices is low, a subset of 6 GHz radios can shift to 5 GHz without the infrastructure knowing.

Therefore, in order to handle these dynamic transitions of multiple-link single radio and multiple-link, multiple radio (MLSR/MLMR) MLD stations, there is a need for a method to better orchestrate multi/single radio MLD devices in wireless deployments.

WO2007102546A1 describes, according to its abstract, a group scheduling method for dynamically grouping all users in a multiple-antenna-multiple-user wireless communication system based on average transmission capability which each user has shown. Since, at a certain scheduled time, the scheduling is time-sequentially carried out for each group. At the same time, two average transmission-capability calculating methods and two user-grouping methods are provided. According to the grouping methods, the number of users subjected to scheduling at the same time is reduced and a system feedback overhead is also reduced. Also, according to the two user-grouping methods, a system throughput quantity and user fairness can be effectively improved.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
FIG. 1A depicts a representative architecture of an access point (AP) for the infrastructure.
FIG. 1B depicts a representative architecture of a multilink device.
FIG. 2 depicts a station-awake scenario.
FIG. 3 depicts management frames.
FIG. 4 depicts a flow of operations, in an embodiment.
FIG. 5 depicts a flow of operations, in an embodiment.
FIG. 6 depicts a tri-band AP and collection of stations.
FIG. 7 depicts a changed condition requiring remapping.

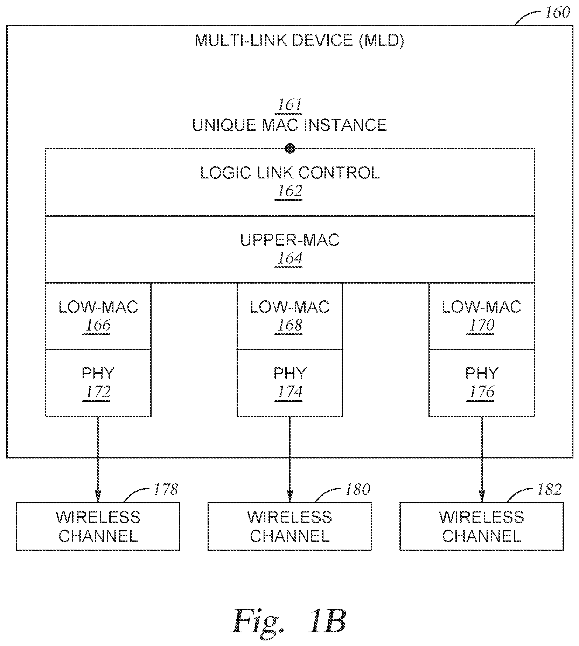

The invention made is disclosed in the embodiments referring to figures 1B, 4 and 5. To facilitate understanding, identical reference numerals have been used where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

One embodiment is a method of allocating radio links for stations capable of operating in different spectra. The method includes forming a collection of stations based on the capabilities of each station, where the capabilities of each station include an operating spectrum and concurrency in transmission and reception in the operating spectrum, determining a radio link recommendation for each station based on the capabilities of each station, determining a load for each link based on each station accepting the radio link recommendation, determining whether the load for each is balanced, if the loads are balanced, sending the radio link recommendation to each station in the collection of stations.

Another embodiment is a system for allocating links for stations operating in different spectra. The system includes an access point and a plurality of stations coupled wirelessly to the access point. The access point is configured to: form a collection of stations based on the capabilities of each station, where the capabilities of each station include an operating spectrum and concurrency in transmission and reception in the operating spectrum; determine a radio link recommendation for each station based on the capabilities of each station; determine a load for each link based on each station accepting the radio link recommendation; determine whether the load for each is balanced; and if the loads are balanced, send the radio link recommendation to each station in the collection of stations.

Yet another embodiment is a non-transitory computer-readable medium encoding instructions, which, when executed by a processor of an access point coupled to a wireless medium, cause the access point to: form a collection of stations based on the capabilities of each station, where the capabilities of each station include an operating spectrum and concurrency in transmission and reception in the operating spectrum. The access point is further caused to determine a radio link recommendation for each station based on the capabilities of each station, a load for each link based on each station accepting the radio link recommendation, whether the load for each is balanced, and if the loads are balanced, send the radio link recommendation to each station in the collection of stations.

Methods and a system described herein form collections of stations based on capabilities and classification of the station and on radio capacity and link budgets of the bands in which the stations operate. Once a collection is formed, a check occurs to determine if there is a rebalancing event, such as a change in the capabilities and classification of a station or a change in the radio capacity and link budgets. If so, then the stations are reassigned to different collections. If no rebalancing event occurs, then the assignment is checked to determine if the loads on the links are well-balanced. If so, a radio link recommendation is sent to the stations.

### EXAMPLE EMBODIMENTS

New standards such as Wi-Fi 7 (also known as IEEE 802.11 be) offer new capabilities. The standard doubles the number of spatial streams (from 8 to 16), doubles the bandwidth of those streams (from 160 MHz to 320 MHz), and increases the OFDMA constellation from 1024 to 4096 compared to Wi-Fi 6. The standard also introduces the concept of a multilink device (MLD), which is a device that has multiple radio interfaces but is accessible at a single medium access control (MAC) address. The MLD may operate over two or three frequency bands and dynamically switch among links. Not only is dynamic switching among links contemplated, but an MLD station may turn off some or all of its links when it goes into a power savings mode.

However, with all of these new features come challenges. In particular, when the MLD station re-awakens, the infrastructure does not know on which band the MLD station will operate. Also, multiple-band operation makes it possible to optimize the use of the bands depending on the capabilities of the stations and the radio frequency environment, especially when the radio frequency environment encounters unforeseen events. There is a need to address how to best use these new capabilities when stations and APs are MLDs.

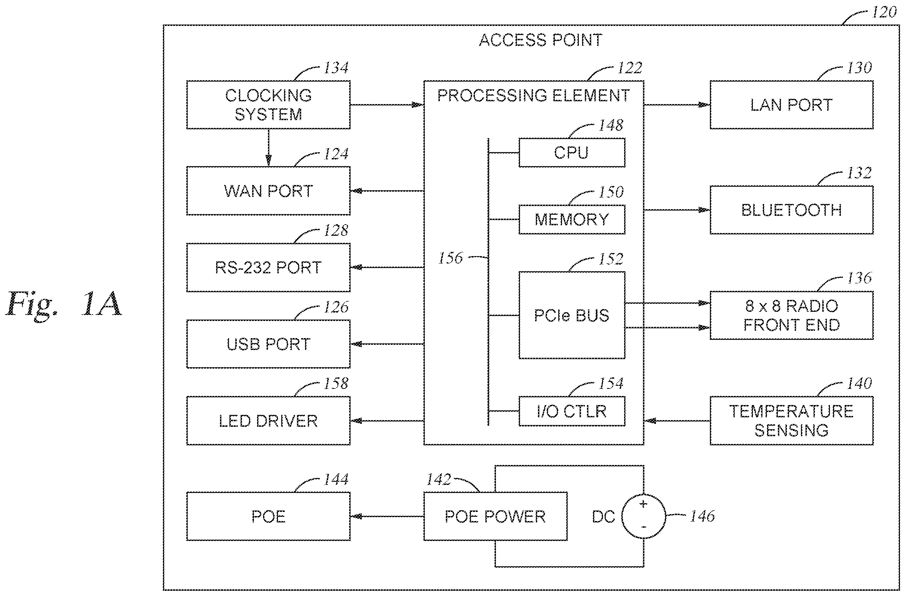

FIG. 1A depicts a representative architecture of an AP for the infrastructure. The AP 120 includes a processing element 122 and several ports or connection facilities, such as a WAN port 124, USB port 126, RS-232 port 128, LAN port 130, and Bluetooth 132. Also included are a clocking system 134 and an 8x8 radio front-end 136 with a transmitter and receiver, which are coupled to eight external antennas. Auxiliary modules include a temperature sensing module 140, a power module 142 connected to a DC power source 146, a power over Ethernet (POE) module 144, and a LED driver 158. Processing element 122 includes a CPU 148 and memory 150, a peripheral control interconnect express (PCIe) bus controller 152 for connecting to the radio front-end 136, and an I/O controller 154, all coupled to each other via bus 156. The AP has the ability to buffer data in the memory 150 for MLD stations that are in the infrastructure but not powered up, for example, MLD stations running on batteries.

FIG. 1B depicts a representative architecture of a multilink device. An AP MLD and a station MLDs refer to a single device with multiple wireless interfaces. MLDs provide a unique MAC instance 161, derived from a Logical Link Control layer 162, to the upper layers without losing the independent parameters of each interface. To achieve this, the MAC sub-layer is split into two levels. The upper MAC (U-MAC) layer 164 is a common part of the MAC sub-layer for all the interfaces. The U-MAC layer assigns sequence numbers and provides aggregation/de-aggregation to MAC service data units (MSDUs). Below the U-MAC layer are the low MAC (L-MAC) layers 166, 168, 170, which are independent for each physical interface PHY (172, 174, 176), which in turn is coupled respectively to wireless channels 178, 180, 182. The L-MAC layer 166, 168, 170 takes care of link-specific functions like channel access and may keep its own channel parameters. The L-MAC layer 166, 168, 170 also generates management and control frames and creates MAC headers and validation when transmitting and receiving, respectively. Thus, an MLD device 160 can move traffic from one link to another without involving the upper layers.

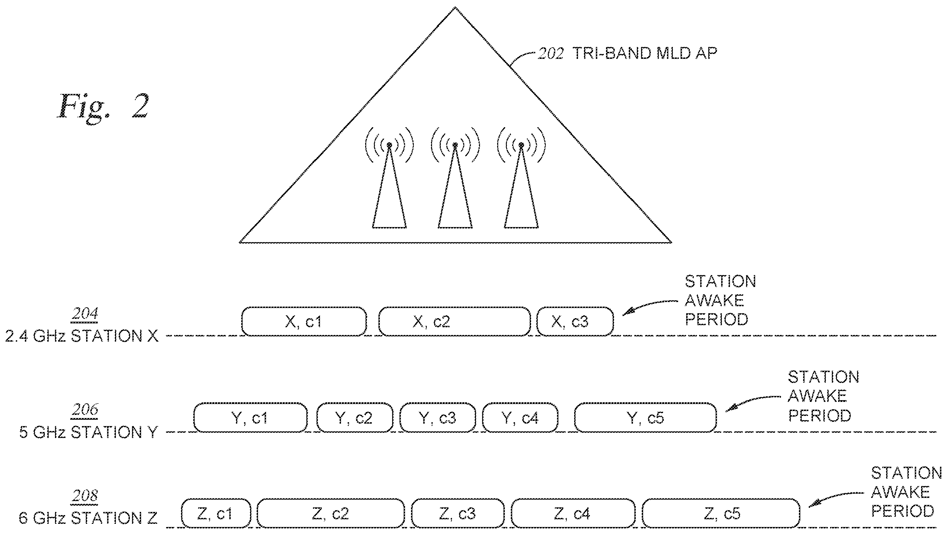

FIG. 2 depicts a station-awake scenario in which stations X, Y, Z awaken in bands and channels that are unpredictable and not under the control of the AP 202. For example, a station X 204 may awaken in the 2.4 GHz band on channel 3; another station Y 206 may awaken in the 5 GHz band on channel 5, while another station Z 208 may awaken in the 6 GHz band on channel 5. Controlling the band on which a station awakens is important to the operation of the infrastructure when the AP 202 has buffered data awaiting transmission to a station.

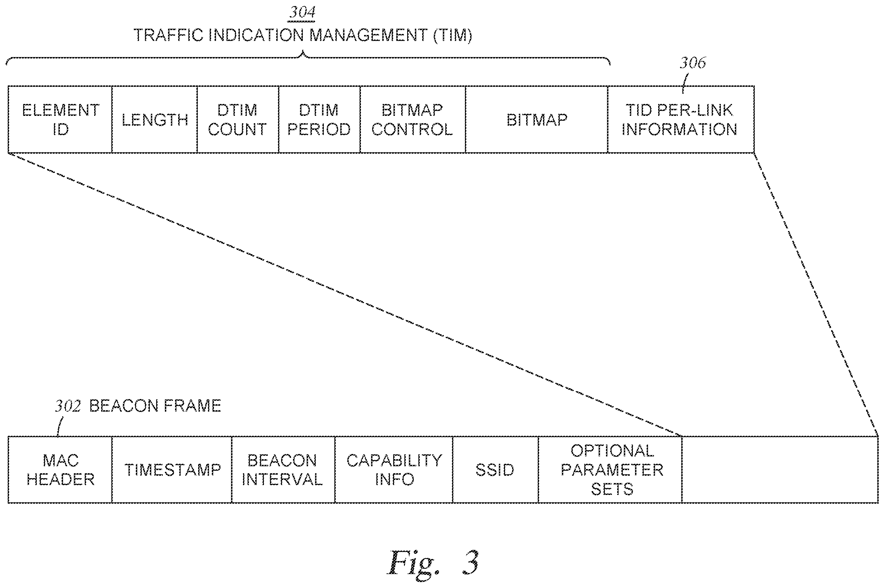

FIG. 3 depicts a beacon frame. The beacon frame 302 includes a MAC header and a frame body having a timestamp, a beacon interval, capability information, a service set ID (SSID) field, a set of optional parameter sets, a traffic indication map (TIM), and a traffic ID (TID) field. The timestamp field allows synchronization between stations in a basic service set (BSS). The beacon interval is the number of time units between beacon transmissions. The capability information is used to advertise the network's capabilities. Stations use this information to determine whether they can support all of the features of the BSS and must support all of the features to join the network. The SSID allows network managers to assign an identifier to the service set. Stations may join a network having a specific SSID. The optional parameter sets include parameters for types of transmissions on the network. The TIM field indicates which stations have buffered traffic waiting to be picked up. The TID field is a bitmap for the various radio links on stations in the BSS. The TIM and TID fields are further described below. Thus, an AP and its stations can learn of each other's capabilities, parameters, and operational capabilities.

As mentioned, the beacon frame 302 includes a TIM field 304 and a TID field 306. The TIM field 304 includes an element ID, a length, a Delivery TIM (DTIM) Count field, a DTIM period field, a bitmap control field, and a bitmap. The element ID is a number for the type of information in the TIM, and length gives the size of the information in the element. The DTIM Count field gives the number of beacons to be transmitted before the next DTIM frame. The DTIM period gives the number of beacon intervals between frames with DTIM. The bitmap control field has a part used for traffic indication status of multicast traffic; another part is an offset into the bitmap field. One use of the TIM field is to notify stations that their AP has buffered data ready to be sent to them. The AP includes the TIM element in beacon frames, which are broadcast periodically.

The TID field classifies different traffic types according to the quality of service needs. By default, AP MLD maps all of the TIDs to all links, indicating that stations are able to retrieve any type of traffic through any link.

As mentioned, the TIM has a bitmap, which may contain up to 2007 bits, each corresponding to a unique associated station. If a bit in the bitmap for a particular station is set to 0, the station remains in the powered-down state. If the bit is set to 1, the station powers up to retrieve data from the AP. The TID, sometimes called a link indication field, is appended to the TIM, in which a bit therein maps to a particular link. Thus, if a station detects a TIM element with a bit set to 1, the station further checks the TID field to find the specific link or links to which the buffered traffic is mapped. Thus, a station need only awaken one of several links to receive buffered traffic.

Single Radio MLDs (both SR and eMLSR) support dynamic link transitions (as referred to under section 35.3.7.2). In 802.11 be draft (1.4), an AP can send link transitions to single radio stations to have these stations schedule a wake-up on a predetermined link so that they can operate in a power save mode on the other links.

While MLD stations have the ability to determine which link to use for their uplink transmissions, methods described herein use the MLE, including the per-link information, to allow AP MLDs to adjust traffic to the best possible spectrum in the event there is localized contention on a Wi-Fi spectrum, non-Wi-Fi saturating spectrum access, or when a segment of the spectrum not available due to the presence of radar interference by using the above-standardized facilities.

The method described herein assigns links to stations based on the types of stations, the capabilities of the stations, and the radio frequency environment in which the stations operate. As described above, the capabilities of the stations are determined by management frames, such as the beacon frame, probe response frame, and association response frame sent and received among the AP and its associated stations.

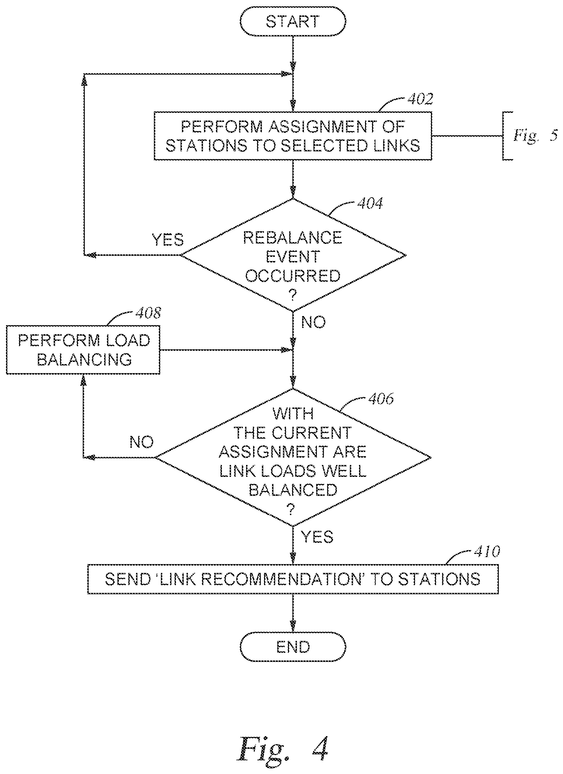

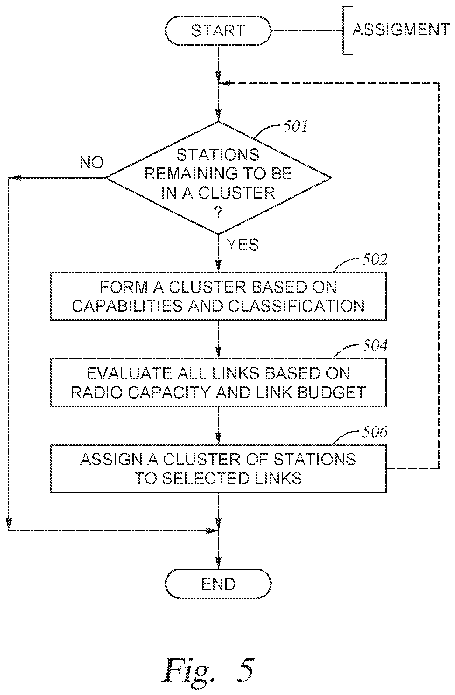

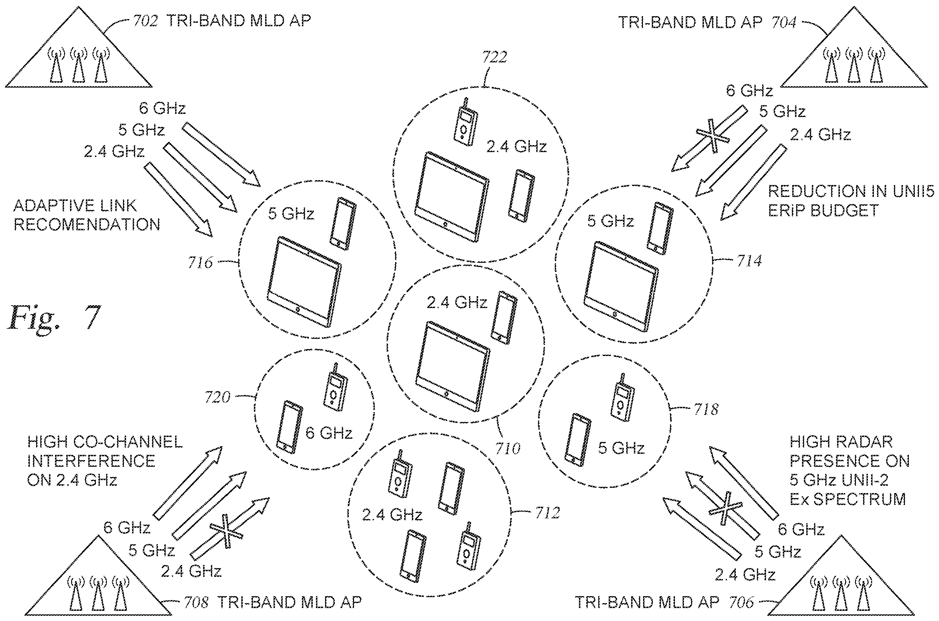

FIG. 4 depicts a flow of operations for a method for assigning links, in an embodiment. In block 402, the method performs an assignment of stations to selected links and is described in more detail in FIG. 7. In block 404, the method determines whether a rebalance event occurred. A rebalance event includes high co-channel interference, high radar presence, or high EiRP, as described in reference to FIG. 5.

In block 406, the method determines whether the links are well-balanced with the current assignment of stations and links. If so, then in block 410, the method sends a radio link recommendation to the stations. If not, then in block 408, the method performs load balancing, reassigning links and stations until link loads are well-balanced in block 408, and then sends the radio link recommendation to the stations in block 410. In one embodiment, loads include channel utilizations of the radio links.

FIG. 5 depicts a flow of operations for assigning links to stations, in an embodiment. If there are stations that have not been assigned to a cluster (i.e., collection) as determined in block 502, then a cluster is formed based on the capabilities and classification of the stations. In block 504, all of the links are evaluated based on the radio capacity and link budget, and in block 506, a cluster of stations is assigned to selected links.

In the flow of FIG. 5, clusters of single radio MLD stations are formed first based on their capabilities, classification (block 502), and radio capacity and link budget (block 504).

The capabilities and classifications include: whether a station supports the ability to monitor multiple spectra or can wake up on one link only; whether a station has the ability to transmit and/or receive at the same time or can only simultaneously transmit or receive but no both together; whether stations support only 2.4 GHz, or 5 GHz, and/or 6 GHz as well; whether a combination of the spectra is supported by multilink devices; the total number of active links supported by the station; whether a station supports TWT or restricted TWT; the amount of traffic buffered as reported in a buffer status report; the minimum wake-up requirements; the level of interference tolerance; whether a station can operate on a band in the presence of higher contention; and whether application traffic patterns are bursty.

Radio capacity and link budgets across all available radio links are determined based on network conditions, which include: using channel state information; determining the quality of service in the basic service set (QBSS); determining the active load from multilink multi-radio wireless stations; discovering Wi-Fi cross channel interference (CCI); discovering non-Wi-Fi interferences; discovering radar Counts/historical radar hits; and determining the EiRP budget on 6 GHz radio (if SP is supported).

In the flow of FIG. 5, assigning a cluster of stations to selected links includes having the stations wake up and look for traffic on a specific spectrum.

After clusters of single radio MLD stations are formed, clusters of multilink stations are formed. However, clusters of multilink stations may be formed first if a policy is oriented toward higher capacity.

In a more complex scenario, a radio link recommendation is determined based on a collocated multiple AP neighborhood on a collection of stations such as those depicted in FIG. 5. The radio link recommendation includes whether adaptive radio link recommendations can trigger on a set of single radio stations when a higher amount of interference on 2.4 GHz would lead to disabling certain links by the system or user, whether a higher number of successive radar hits would result in excessive degradation in 5 GHz link capacity; and whether the presence of an incumbent would drive a lower equivalent isotropic radiated power budge on the active 6 GHz frequency.

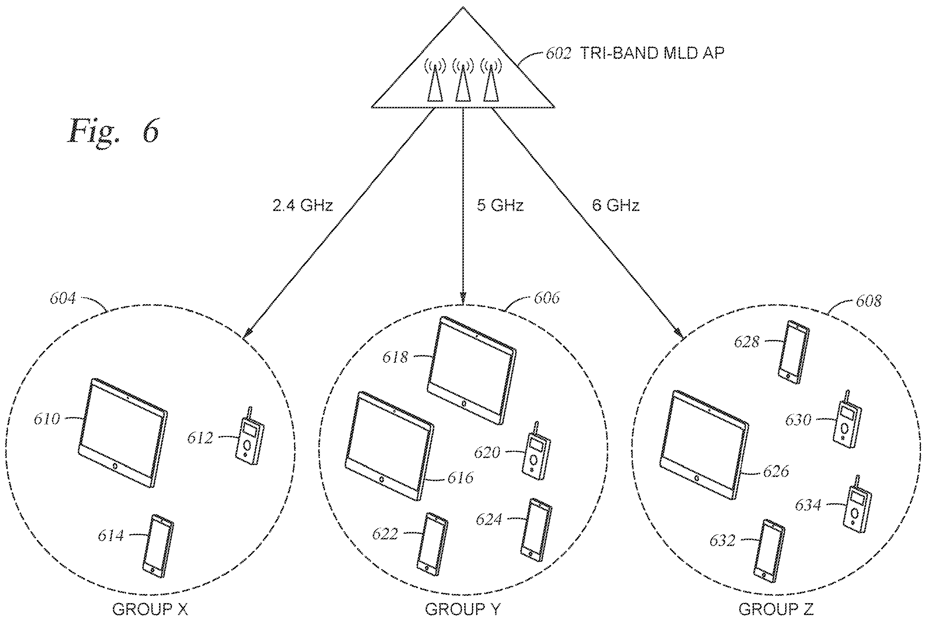

FIG. 6 depicts an example of a tri-band AP and a collection of stations formed in accordance with block 502 of FIG. 5. In the figure, AP 602 supports three bands, 2.4 GHz, 5 GHz, and 6 GHz, and collection (or groups) of stations X 604, Y 606, and Z 608, which are formed according to block 402 of FIG. 4. Group X 604 includes stations 610, 612, 614. Group Y 606 includes stations 616, 618, 620, 622, 624. Group Z 608 includes stations 626, 628, 630, 632, 634. Group X 604 operates in the 2.4 GHz band; group Y 606 operates in the 5 GHz band; and group Z 608 operates in the 6 GHz band.

FIG. 7 depicts an example of changed conditions requiring the remapping of links according to blocks 404-410 of FIG. 4 due to an event occurring in the radio frequency environment. The figure depicts four APs (APs) 702, 704, 706, and 708, and collections 710, 712, 714, 716, 718, 720, 722 of stations which were formed according to block 502 of FIG. 5. Stations in collections 710, 712, 722 operate in the 2.4 GHz band. Stations in collections 714, 716, 718 operate in the 5 GHz band. Stations in collection 720 operate in the 6 GHz band. Each AP 702, 704, 706, 708 is capable of operating in all three bands. However, AP2 708 cannot operate on the 2.4 GHz band because of high co-channel interference. AP3 706 cannot operate on the 5 GHz band because of high radar presence. AP4 704 cannot operate on the 6 GHz band due to high EiRP. Thus, the AP has readjusted the collection and mapping of links to handle the changed conditions.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer-readable medium(s) having computer-readable program code embodied thereon.

Program code embodied on a computer-readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special-purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer-readable medium that can direct a computer, other programmable data processing apparatus, or other device to function in a particular manner, such that the instructions stored in the computer-readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer-implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method of allocating radio links for stations (160) capable of operating in different spectra, the method comprising:
forming (502) a collection of stations based on capabilities of each station, wherein the capabilities of each station include an operating spectrum and concurrency in transmission and reception in the operating spectrum;
determining (506, 402) a radio link recommendation for each station based on the capabilities of each station;
determining a load for each radio link based on each station accepting the radio link recommendation;
determining (406) whether the load for each radio link is balanced; and
if the loads are balanced, sending (410) the radio link recommendation to each station in the collection of stations.

2. The method of claim 1, wherein the collection of stations includes single-radio multilink, and multiple-radio multilink devices.

3. The method of any preceding claim, wherein determining whether the loads on the radio links are balanced includes determining channel utilizations of the radio links.

4. The method of any preceding claim, wherein determining a radio link recommendation for each station includes determining whether each station can operate on multiple spectra.

5. The method of claim 4, wherein determining a radio link recommendation for each station includes determining whether each station can operate with different spectra on multiple radio links.

6. The method of any preceding claim, wherein determining a radio link recommendation for each station includes determining whether each station can wake up on one or more radio links.

7. The method of any preceding claim, wherein determining a radio link recommendation for each station includes determining an amount of interference on a channel in the operating spectrum of each station.

8. A system for allocating links for stations operating in different spectra, the system comprising:
an access point (120); and
a plurality of stations (160) coupled wirelessly to the access point;
wherein the access point is configured to:
form (502) a collection of stations based on capabilities of each station, wherein the capabilities of each station include an operating spectrum and concurrency in transmission and reception in the operating spectrum;
determine (506, 402) a radio link recommendation for each station based on the capabilities of each station;
determine a load for each radio link based on each station accepting the radio link recommendation;
determine (406) whether the load for each radio link is balanced; and
if the loads are balanced, send (410) the radio link recommendation to each station in the collection of stations.

9. The system of claim 8, wherein the access point is configured to perform the method of any of claims 2 to 7.

10. An access point (120) configured to:
form (502) a collection of stations (160) based on capabilities of each of a plurality of stations coupled wirelessly to the access point, wherein the capabilities of each station include an operating spectrum and concurrency in transmission and reception in the operating spectrum;
determine (506, 402) a radio link recommendation for each station based on the capabilities of each station;
determine a load for each radio link based on each station accepting the radio link recommendation;
determine (406) whether the load for each radio link is balanced; and
if the loads are balanced, send (410) the radio link recommendation to each station in the collection of stations.

11. The access point of claim 10, wherein the access point is configured to perform the method of any of claims 2 to 7.

12. A computer-readable medium (150) encoding instructions, which, when executed by a processor (122, 148) of an access point (120) coupled to a wireless medium, configure the access point to allocate radio links for stations capable of operating in different spectra, by:
forming (502) a collection of stations based on capabilities of each station, wherein the capabilities of each station include an operating spectrum and concurrency in transmission and reception in the operating spectrum;
determining (506, 402) a radio link recommendation for each station based on the capabilities of each station;
determining a load for each radio link based on each station accepting the radio link recommendation;
determining (406) whether the load for each radio link is balanced; and
if the loads are balanced, sending (410) the radio link recommendation to each station in the collection of stations.

13. The computer-readable medium of claim 12, wherein the instructions, when executed by the processor, configure the access point to perform the method of any of claims 2 to 7.

## Patentansprüche

1. Verfahren zum Zuweisen von Funkverbindungen für Stationen (160), die zum Betrieb in unterschiedlichen Spektren fähig sind, wobei das Verfahren umfasst:
Bilden (502) einer Gruppe von Stationen basierend auf Fähigkeiten jeder Station, wobei die Fähigkeiten jeder Station ein Betriebsspektrum und Gleichzeitigkeit beim Senden und Empfangen in dem Betriebsspektrum beinhalten;
Bestimmen (506, 402) einer Funkverbindungsempfehlung für jede Station basierend auf den Fähigkeiten jeder Station;
Bestimmen einer Last für jede Funkverbindung basierend darauf, dass jede Station die Funkverbindungsempfehlung annimmt;
Bestimmen (406), ob die Last für jede Funkverbindung ausgeglichen ist; und
wenn die Lasten ausgeglichen sind, Senden (410) der Funkverbindungsempfehlung an jede Station in der Gruppe von Stationen.

2. Verfahren nach Anspruch 1, wobei die Gruppe von Stationen Einzel-Funk-Mehrfachverbindungs- und Mehrfach-Funk-Mehrfachverbindungs-Vorrichtungen beinhaltet.

3. Verfahren nach einem der vorhergehenden Ansprüche, wobei das Bestimmen, ob die Lasten auf den Funkverbindungen ausgeglichen sind, das Bestimmen von Kanalauslastungen der Funkverbindungen beinhaltet.

4. Verfahren nach einem der vorhergehenden Ansprüche, wobei das Bestimmen einer Funkverbindungsempfehlung für jede Station das Bestimmen beinhaltet, ob jede Station auf mehreren Spektren arbeiten kann.

5. Verfahren nach Anspruch 4, wobei das Bestimmen einer Funkverbindungsempfehlung für jede Station das Bestimmen beinhaltet, ob jede Station mit unterschiedlichen Spektren auf mehreren Funkverbindungen arbeiten kann.

6. Verfahren nach einem der vorhergehenden Ansprüche, wobei das Bestimmen einer Funkverbindungsempfehlung für jede Station das Bestimmen beinhaltet, ob jede Station auf einer oder mehreren Funkverbindungen aufwachen kann.

7. Verfahren nach einem der vorhergehenden Ansprüche, wobei das Bestimmen einer Funkverbindungsempfehlung für jede Station das Bestimmen eines Ausmaßes an Interferenz auf einem Kanal in dem Betriebsspektrum jeder Station beinhaltet.

8. System zum Zuweisen von Verbindungen für Stationen, die in unterschiedlichen Spektren arbeiten, wobei das System umfasst:
einen Zugangspunkt (120); und
eine Vielzahl von Stationen (160), die drahtlos mit dem Zugangspunkt gekoppelt sind;
wobei der Zugangspunkt konfiguriert ist, um:
Bilden (502) einer Gruppe von Stationen basierend auf Fähigkeiten jeder Station, wobei die Fähigkeiten jeder Station ein Betriebsspektrum und Gleichzeitigkeit beim Senden und Empfangen in dem Betriebsspektrum beinhalten;
Bestimmen (506, 402) einer Funkverbindungsempfehlung für jede Station basierend auf den Fähigkeiten jeder Station;
Bestimmen einer Last für jede Funkverbindung basierend darauf, dass jede Station die Funkverbindungsempfehlung annimmt;
Bestimmen (406), ob die Last für jede Funkverbindung ausgeglichen ist; und
wenn die Lasten ausgeglichen sind, die Funkverbindungsempfehlung an jede Station in der Gruppe von Stationen zu senden (410).

9. System nach Anspruch 8, wobei der Zugangspunkt konfiguriert ist, um das Verfahren nach einem der Ansprüche 2 bis 7 durchzuführen.

10. Zugangspunkt (120), der konfiguriert ist, um:
Bilden (502) einer Gruppe von Stationen (160) basierend auf Fähigkeiten jeder einer Vielzahl von Stationen, die drahtlos mit dem Zugangspunkt gekoppelt sind, wobei die Fähigkeiten jeder Station ein Betriebsspektrum und Gleichzeitigkeit beim Senden und Empfangen in dem Betriebsspektrum beinhalten;
Bestimmen (506, 402) einer Funkverbindungsempfehlung für jede Station basierend auf den Fähigkeiten jeder Station;
Bestimmen einer Last für jede Funkverbindung basierend darauf, dass jede Station die Funkverbindungsempfehlung annimmt;
Bestimmen (406), ob die Last für jede Funkverbindung ausgeglichen ist; und
wenn die Lasten ausgeglichen sind, die Funkverbindungsempfehlung an jede Station in der Gruppe von Stationen zu senden (410) .

11. Zugangspunkt nach Anspruch 10, wobei der Zugangspunkt konfiguriert ist, um das Verfahren nach einem der Ansprüche 2 bis 7 durchzuführen.

12. Computerlesbares Medium (150), das Anweisungen kodiert, die, wenn sie von einem Prozessor (122, 148) eines Zugangspunkts (120) ausgeführt werden, der mit einem drahtlosen Medium gekoppelt ist, den Zugangspunkt konfigurieren, um Funkverbindungen für Stationen zuzuweisen, die zum Betrieb in unterschiedlichen Spektren fähig sind, durch:
Bilden (502) einer Gruppe von Stationen basierend auf Fähigkeiten jeder Station, wobei die Fähigkeiten jeder Station ein Betriebsspektrum und Gleichzeitigkeit beim Senden und Empfangen in dem Betriebsspektrum beinhalten;
Bestimmen (506, 402) einer Funkverbindungsempfehlung für jede Station basierend auf den Fähigkeiten jeder Station;
Bestimmen einer Last für jede Funkverbindung basierend darauf, dass jede Station die Funkverbindungsempfehlung annimmt;
Bestimmen (406), ob die Last für jede Funkverbindung ausgeglichen ist; und
wenn die Lasten ausgeglichen sind, Senden (410) der Funkverbindungsempfehlung an jede Station in der Gruppe von Stationen.

13. Computerlesbare Medium nach Anspruch 12, wobei die Anweisungen, wenn sie von dem Prozessor ausgeführt werden, den Zugangspunkt konfigurieren, um das Verfahren nach einem der Ansprüche 2 bis 7 durchzuführen.

## Revendications

1. Procédé d'attribution de liaisons radio pour des stations (160) capables de fonctionner dans différents spectres, le procédé comprenant le fait :
de former (502) un ensemble de stations en se basant sur des capacités de chaque station, procédé dans lequel les capacités de chaque station comprennent un spectre de fonctionnement et la simultanéité de la transmission et de la réception dans le spectre de fonctionnement ;
de déterminer (506, 402) une recommandation de liaison radio pour chaque station, en se basant sur les capacités de chaque station ;
de déterminer une charge pour chaque liaison radio, en se basant sur chaque station acceptant la recommandation de liaison radio ;
de déterminer (406) si la charge pour chaque liaison radio est équilibrée ; et
si les charges sont équilibrées, le procédé comprend l'envoi (410) de la recommandation de liaison radio à chaque station parmi l'ensemble de stations.

2. Procédé selon la revendication 1, dans lequel l'ensemble de stations comprend des dispositifs multiliaison à radio unique et à radios multiples.

3. Procédé selon l'une des revendications précédentes, dans lequel le fait de déterminer si les charges sur les liaisons radio sont équilibrées, comprend la détermination d'utilisation de canaux des liaisons radio.

4. Procédé selon l'une quelconque des revendications précédentes, dans lequel la détermination d'une recommandation de liaison radio pour chaque station comprend le fait de déterminer si chaque station peut fonctionner sur des spectres multiples.

5. Procédé selon la revendication 4, dans lequel la détermination d'une recommandation de liaison radio pour chaque station comprend le fait de déterminer si chaque station peut fonctionner avec différents spectres sur des liaisons radio multiples.

6. Procédé selon l'une quelconque des revendications précédentes, dans lequel la détermination d'une recommandation de liaison radio pour chaque station comprend le fait de déterminer si chaque station peut se réveiller sur une ou plusieurs liaisons radio.

7. Procédé selon l'une quelconque des revendications précédentes, dans lequel la détermination d'une recommandation de liaison radio pour chaque station comprend la détermination d'un niveau d'interférence sur un canal dans le spectre de fonctionnement de chaque station.

8. système d'attribution de liaisons pour des stations fonctionnant dans différents spectres, ledit système comprenant :
un point d'accès (120) ; et
une pluralité de stations (160) connectées sans fil au point d'accès ;
système dans lequel le point d'accès est configuré pour :
former (502) un ensemble de stations en se basant sur des capacités de chaque station, système dans lequel les capacités de chaque station comprennent un spectre de fonctionnement et la simultanéité de la transmission et de la réception dans le spectre de fonctionnement ;
déterminer (506, 402) une recommandation de liaison radio pour chaque station, en se basant sur les capacités de chaque station ;
déterminer une charge pour chaque liaison radio, en se basant sur chaque station acceptant la recommandation de liaison radio ;
déterminer (406) si la charge pour chaque liaison radio est équilibrée ; et
si les charges sont équilibrées, le système comprend l'envoi (410) de la recommandation de liaison radio à chaque station parmi l'ensemble de stations.

9. système selon la revendication 8, dans lequel le point d'accès est configuré pour mettre en œuvre le procédé selon l'une quelconque des revendications 2 à 7.

10. Point d'accès (120) configuré pour :
former (502) un ensemble de stations (160) en se basant sur des capacités de chacune de celles parmi une pluralité de stations connectées sans fil au point d'accès dans lequel les capacités de chaque station comprennent un spectre de fonctionnement et la simultanéité de la transmission et de la réception dans le spectre de fonctionnement ;
déterminer (506, 402) une recommandation de liaison radio pour chaque station, en se basant sur les capacités de chaque station ;
déterminer une charge pour chaque liaison radio, en se basant sur chaque station acceptant la recommandation de liaison radio ;
déterminer (406) si la charge pour chaque liaison radio est équilibrée ; et
si les charges sont équilibrées, le point d'accès comprend l'envoi (410) de la recommandation de liaison radio à chaque station parmi l'ensemble de stations.

11. Point d'accès selon la revendication 10, où le point d'accès est configuré pour mettre en œuvre le procédé selon l'une quelconque des revendications 2 à 7.

12. support (150) lisible par ordinateur, ledit support codant des instructions qui, lorsqu'elles sont exécutées par un processeur (122, 148) d'un point d'accès (120) connecté à un milieu sans fil, configurent le point d'accès afin d'attribuer des liaisons radio pour des stations capables de fonctionner dans différents spectres, en :
formant (502) un ensemble de stations en se basant sur des capacités de chaque station, point d'accès dans lequel les capacités de chaque station comprennent un spectre de fonctionnement et la simultanéité de la transmission et de la réception dans le spectre de fonctionnement ;
déterminant (506, 402) une recommandation de liaison radio pour chaque station, en se basant sur les capacités de chaque station ;
déterminant une charge pour chaque liaison radio, en se basant sur chaque station acceptant la recommandation de liaison radio ;
déterminant (406) si la charge pour chaque liaison radio est équilibrée ; et
si les charges sont équilibrées, le point d'accès comprend l'envoi (410) de la recommandation de liaison radio à chaque station parmi l'ensemble de stations.

13. support lisible par ordinateur selon la revendication 12, dans lequel les instructions, lorsqu'elles sont exécutées par le processeur, configurent le point d'accès afin de mettre en œuvre le procédé selon l'une quelconque des revendications 2 à 7.
